# EUROPEAN PATENT SPECIFICATION

(11) **EP 1 211 021 B1**
(45) Date of publication and mention of the grant of the patent: **19.07.2006**
(21) Application number: 01830326.3
(22) Date of filing: 21.05.2001
(51) Int. Cl.: B23Q 39/04, B23Q 1/54, B23Q 16/02

(54) **A transfer type machine tool**
Rundtaktwerkzeugmaschine
Machine-outil de transfert

(30) Priority: 02.11.2000 EP 00830727
(43) Date of publication of application: 05.06.2002
(73) Proprietor: IEMCA Giuliani Macchine Italia S.p.A., 48018 Faenza (Ravenna) (IT)
(72) Inventor: Dellamore, Edo, 40050 Monte San Pietro (Bologna) (IT)
(74) Representative: Lanzoni, Luciano

(56) References cited:
- EP-A- 0 011 256
- EP-A- 0 681 881
- EP-A- 0 699 503
- WO-A-88/10172
- DE-A- 2 404 483
- DE-A- 4 007 054
- US-A- 1 835 591
- US-A- 3 153 276
- US-A- 3 226 742
- US-A- 3 371 564
- US-A- 5 910 201
- BOETZ, V: "Mehrwege-Halbautomaten mit hängendem Teilkopf" WERKSTATT UND BETRIEB, vol. 106, no. 5, 1973, pages 319-320, XP002196537 Baden

## Description

The present invention has for an object a machine tool of the transfer type.

The invention relates in particular to a machine tool of the transfer type equipped with a rotary table where the workpieces to be subjected to different machine processes are transported by the rotary table to a plurality of machining stations where they are machined by specific operating units.

As is known, machine tools of this type have a base designed to support the operating units, which are mounted around the rotary table. The rotary table feeds the workpieces to the machining stations for processing.

Looking in more detail, each workpiece is held by a gripping element mounted on the rotary table. Usually, the gripping elements consist of clamps mounted at the edge of the rotary table.

There are preferably as many gripping elements as there are machining stations, so that all the workpieces can be machined simultaneously.

The first machining station is a loading station where the workpiece is positioned on the gripping element.

The workpiece then passes through the subsequent machining stations, each of which is designed to perform a specific operation on it. After being machined, the workpiece is conveyed to an unloading station where the clamp releases it.

In these transfer type machine tools, the number of machining stations varies according to the type of operations to be performed on the workpiece. For example, a machine may be equipped with lathes, milling cutters, drills or other operating units.

For processes where the relative position between the operating unit and the workpiece has to be changed, the workpiece is normally mounted on a mobile gripping element fitted to the rotary table. The gripping element is electrically powered and is designed to orientate the workpiece according to the type of machining that the operating unit has to perform on it and according to the part of the workpiece to be machined.

Machines of this kind are known from documents US3226742 and US3153276.

Document US3226742 discloses a machine tool which comprises means for conveying workpieces successively to boring and screw cutting tools which act on successive workpieces simultaneously. The machine has three drilling units and three screw-cutting or threading units. The tools may be rotated by belt gearing and the feed screws in the tapping or threading units may be exchangeable. Four working stations and one unloading station may be provided on the turret.

Document US3153276 discloses a multistation machine for performing successive operations on a workpiece which includes a work holding and positioning apparatus. The machine comprises a turret for rotation about an upright axis and chucks carried by the turret and rotating with it. The turret rotates to index the chucks successively to different preselected machining stations spaced about the upright axis.

Machine tools of this type have several disadvantages.

The disadvantages are mainly linked to the structural complexity of the machines. Indeed machine tools equipped with a large number of machining stations are extremely bulky and have highly complex structures on account of the numerous operating units mounted around the rotary table.

In this situation, the rotary table also has to be very large because it must be able to support the high number of gripping elements and, consequently, large workspaces are also required.

Another disadvantage is the difficulty of carrying out maintenance, checking and other operations that have to be carried out manually on the operating units by an operator.

Indeed, owing to the large, complex structure, it is very difficult for an operator working from the outside of the operating units to gain access to certain parts of the machine, especially if the operating units to be checked are located at the top of the machine.

In this situation, the technical target which the present invention aims to achieve is to overcome the above mentioned disadvantages through a transfer type machine tool of new design.

The present invention therefore has for an object to provide a machine tool of the transfer type that has a simplified structure, but without reducing the optimum number of machining operations that can be performed on the workpiece.

In particular, it is an important aim of the present invention to provide a machine tool of the transfer type in which the structure of the rotary table is optimised, that is to say, with an optimum number of machining stations mounted around the rotary table.

Another aim of the invention is to provide a transfer type machine tool of reduced size such that all parts of it can be easily accessed by an operator.

These and other aims are accomplished by a machine tool of the transfer type as described in the accompanying claims.

Further characteristics and advantages of the invention will emerge from the detailed description which follows of preferred embodiments of a transfer type machine tool according to the invention without restricting the scope of the inventive concept and with reference to the accompanying drawings, in which:
- Figure 1 is a side elevation view, with some parts cut away, of a transfer type machine tool made in accordance with the present invention;
- Figure 2 is a view similar to that of Figure 1, with one machining station removed in order to better illustrate the rotary table according to a first embodiment of the invention;
- Figure 3 is a view similar to that of Figure 1, with one machining station removed in order to better illustrate the rotary table according to another embodiment of the invention;
- Figure 4 is a plan view, with some parts in cross section and others cut away, of the machine tool shown in Figure 1;
- Figure 5 is a longitudinal section of a gripping element mounted on the rotary table illustrated in Figure 1;
- Figure 6 is a cross section through line VI-VI in Figure 5.

With reference to the accompanying drawings, the numeral 1 denotes in its entirety a machine tool of the transfer type.

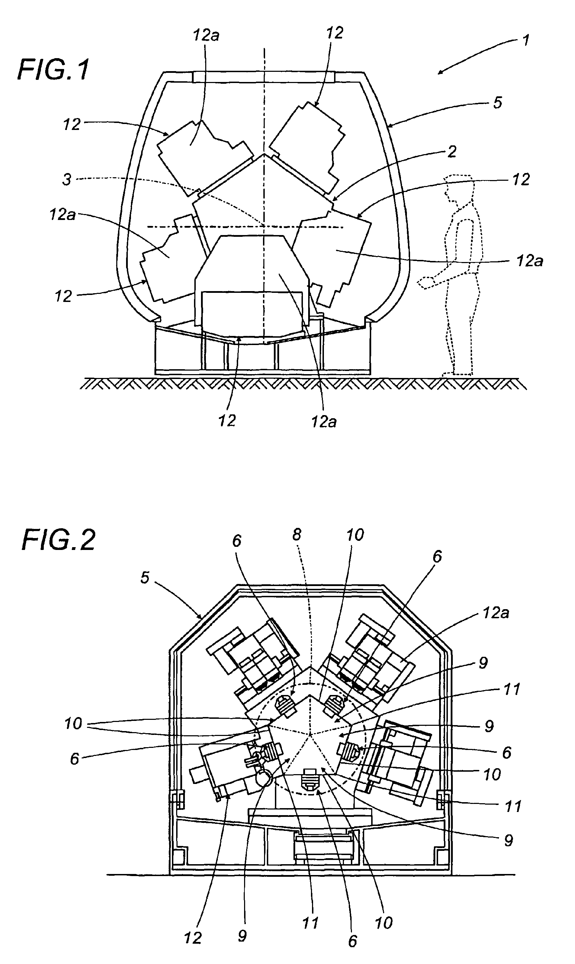

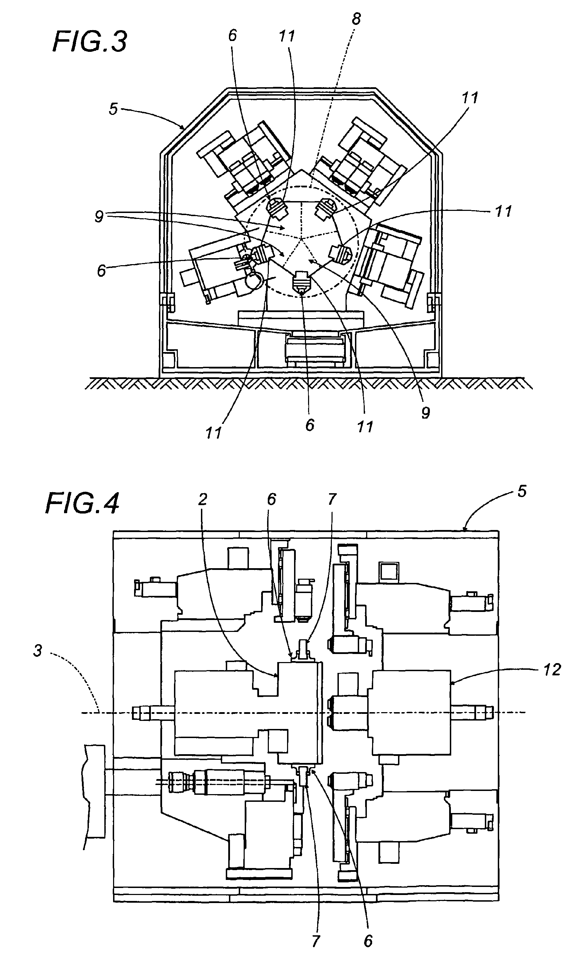

The machine 1 comprises a rotary unit 2 that rotates about an axis 3 (see Figures 1 and 4). The rotary unit 2 is coupled to a motor 4 which is in turn mounted on a frame 5 of the machine tool 1. Preferably, the rotary unit 2 is in the form of a table and the axis of rotation 3 is parallel to the ground.

The rotary unit 2 has a plurality of gripping elements 6 mounted around the edge of it. Each gripping element 6 is designed to hold at least one workpiece 7 and to transport it along a machining path 8 described by the rotational motion of the rotary unit 2. The machining path 8 is substantially circular and corresponds to the trajectory described by the workpieces 7 transported by the rotary unit 2.

Looking in more detail, the rotary unit 2 is divided into five sectors 9 located around the rotary unit 2 itself. Each sector 9 includes a portion of the edge of the rotary unit 2 and is equipped with at least one gripping element 6.

As shown in Figures 2 and 3, the rotary unit 2 has the shape of polygon, preferably a pentagon, with fives sides 10 making five corners 11.

According to a first embodiment, illustrated in Figure 2, each sector 9 is formed by one side 10 of the rotary unit 2 itself. Each gripping element 6 is positioned at the corresponding side 10 of the rotary unit 2.

In an embodiment that is not illustrated in the accompanying drawings, each side 10 of the rotary unit 2 may be equipped with more than one gripping element 6.

Alternatively, according to the second embodiment illustrated in Figure 3, each sector 9 is formed by two adjacent half-sides of the polygon making between them the corner 11 on the rotary unit. In this case, there is a gripping element 6 mounted at each corner 11 of the rotary unit 2. Again, there may be more than one gripping element 6 at each corner 11 of the rotary unit 2.

There is a plurality of machining stations 12 arranged around the machining path 8 in a circle that is concentric with the machining path 8 itself.

The machining stations 12 comprise operating units 12a mounted on the frame 5, each designed to perform a specific machining operation on the workpiece 7. The operating units 12a differ in type according to the type of operation they perform on the workpiece 7. For example, the operating units 12a may consist of lathes, milling cutters or drills.

At least two of the machining stations 12 are, respectively, a station for loading the workpiece 7 onto one of the gripping elements 6, and a station for unloading the workpiece 7 from the gripping element 6.

Preferably, there are five machining stations 12 and each sector 9 of the rotary unit 2 is located at one machining station 12. Advantageously, all the workpieces 7 held by the gripping elements 6 at the machining stations 12 are machined at the same time.

Each gripping element 6 is rotatably mounted on the rotary unit 2 in such a way as to turn about a second axis 13, which is substantially transversal to the first axis 3.

Preferably, each gripping element 6 comprises a clamp 14 designed to hold the workpiece 7.

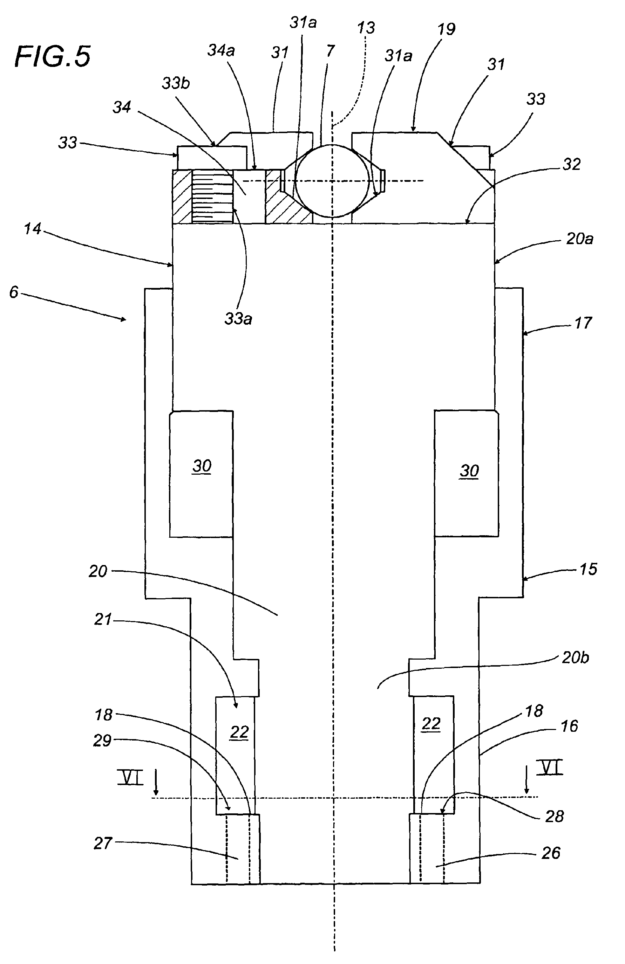

As shown in Figure 5, the clamp 14 comprises an outer casing 15 having a substantially tubular shape and extending longitudinally in a direction corresponding to the second axis 13. The outer casing 15 comprises a first end 16 that is rigidly attached to the rotary unit 2, and a second end 17, opposite the first end 16, where a portion 19 that clamps the workpiece 7 is positioned, said portion being described in more detail below.

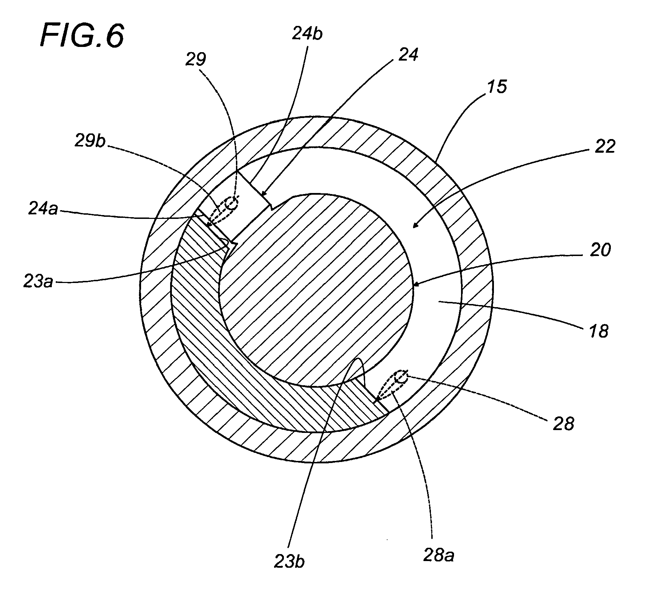

At the first end 16, on a portion inside the outer casing 15, there is an annular surface 18 (Figure 6), extending transversally relative to the second axis 13.

A shaft 20 extending longitudinally in a direction coinciding with the second axis 13 is rotatably mounted inside the outer casing 15. The shaft 20 is substantially cylindrical in shape, with a first end 20a rigidly connected to the clamping portion 19, and a second end 20b, located opposite the first end 20a and abutting against the annular surface 18.

Appropriate drive means 21 located at the first end 16 of the casing 15 are used to rotate the shaft 20 in the casing 15.

Looking in more detail, the drive means 21 comprise an annular chamber 22 formed between the inner surface of the outer casing 15 and the outer surface of the shaft 20.

As shown more clearly in Figure 6, this is created by the difference between the diameter of the second end 20b of the shaft 20 which is smaller than the diameter of the outer casing 15.

A stop element 23 extends into the annular chamber 22 and occupies a portion of the annular chamber 22. The stop element 23 is substantially arc-shaped and comprises two opposite contact surfaces 23a and 23b, respectively first and second. Looking in more detail, the contact surfaces 23a and 23b are face to face within the annular chamber 22 and extend in a substantially radial direction relative to the annular chamber 22.

The drive means 21 also comprise a protrusion 24 extending from the second end 20b of the shaft 20 in a direction transversal to the longitudinal direction in which the shaft 20 extends. The protrusion 24 extends into the annular chamber 22 and has two opposite faces 24a and 24b, respectively first and second, which extend in a direction radial to the second axis 13. The first and second faces 24a and 24b face the first and second contact surfaces 23a and 23b of the stop element 23, respectively. Thus, when the shaft 20 rotates, the protrusion 24 moves between a position in which its first face 24a abuts against the first contact surface 23a, and a second position in which its second face 24b abuts against the second contact surface 23b.

The drive means 21 further comprise a hydraulic power unit 25 mounted in the rotary unit 2.

The hydraulic power unit 25 comprises a first and a second duct 26, 27 made in the rotary unit 2. These ducts allow a fluid chamber, which is not illustrated in the accompanying drawings, to communicate with the annular chamber 22. The fluid chamber, which is of known type and therefore not described in further detail, is advantageously located inside the rotary unit 2 and is equipped with a fluid intake and delivery pump (also of known type and therefore not described in further detail) designed to suck in and deliver the fluid within the first and second ducts 26 and 27.

The first duct 26 comprises a first delivery port 28 made in the annular surface 18 and located close to the first contact surface 23a of the stop element 23. The first delivery port 28 has a portion 28a for discharging the fluid and consisting of a concavity made in the annular surface 18. As shown in more detail in Figure 6, the discharge portion 28a is substantially ovoid in shape, with a longitudinal axis that is transversal to the first contact surface 23a of the stop element 23.

Like the first duct 26, the second duct 27 also comprises a second delivery port 29 made in the annular surface 18 and located close to the second contact surface 23b of the stop element 23. The second delivery port 29 also has a fluid discharge portion 29a consisting of a concavity made in the annular surface 18. As shown in more detail in Figure 6, the discharge portion 29a is substantially ovoid in shape, with a longitudinal axis that is transversal to the second contact surface 23b of the stop element 23.

The diameter of the first end 20a of the shaft 20 is larger than the diameter of the second end 20b and substantially corresponds to the inside diameter of the outer casing 15. During rotation of the shaft 20, to prevent the outer surface of the first end 20a from scraping against the inside surface of the outer casing 15, there are bearings 30 mounted between the shaft 20 and the outer casing 15. The bearings 30, which are of known type and therefore not described further, reduce friction between the shaft 20 and the outer casing 15, allowing the shaft 20 to rotate smoothly inside the outer casing 15.

The portion 19 that clamps the workpiece 7 extends from the top of the first end 20a of the shaft 20, on the outside of the outer casing 15.

The clamping portion 19 comprises at least two jaws 31 that face each other and are mounted in diametrically opposite positions on an outer surface 32 of the shaft 20 transversal to the longitudinal direction in which the shaft 20 extends. Each jaw 31 has a gripping surface 31a designed to come into contact with the workpiece 7. The gripping surfaces 31a of the jaws 31 face each other and may differ in shape according to the structure of the workpiece 7 to be machined. Thus, the gripping surfaces 31a may be shaped to match the shape of the workpiece 7 so as to hold it securely between the jaws 31.

The jaws 31 can slide in a radial direction relative to the shaft 20 in an appropriate slideway made in the outer surface 32 of the shaft 20. The slideway, which is not illustrated in the drawings since it is of a type well known to experts in the trade, extends in a diametrical direction relative to the shaft 20. Thus, the jaws 31 can move between a working position in which they are close to each other and their respective gripping surfaces 31a clamp the workpiece 7, and an idle position in which they are apart and in which their gripping surfaces 31a release the workpiece 7.

Preferably, the jaws 31 are driven by a hydraulic system similar to the one that drives the shaft 20.

The clamping portion 19 further comprises at least two screws 33, each connected to one of the jaws 31 and designed to secure the jaw to the shaft 20.

As shown in more detail in Figure 5, each screw 33 has a first end 33a which is screwed into the first end 20a of the shaft 20, and a head 33b inserted into an opening 34 made in the corresponding jaw 31. Looking in more detail, the opening 34 in each jaw 31 extends in the direction of movement of the jaw 31 itself to form a groove 34a extending transversally relative to the second axis 13.

In this situation, the head 33b of the screw 33 abuts against the groove 34a of the opening 34 in such a way as to keep the jaw 31 in a position of abutment against the shaft 20.

The machine tool structured according to the invention as described above, will now be described in terms of its operation.

The unit 2 rotates about the first axis 3, transporting each gripping element 6 along the machining path 8 into one of the five machining stations 12. Following in more detail the path of just one of the gripping elements 6, the rotary unit 2 first transports the gripping element 6 to the loading station 12 where the workpiece 7 is gripped between the two jaws 31.

Advantageously, the jaws 31 may be chosen according to the shape of the workpiece 7.

The rotary unit 2 then transports the workpiece 7 to the other machining stations 12 one by one, each of which performs a specific machining operation on it.

In the machining stations 12 where the workpiece 7 has to be orientated, the clamp 14 is rotated until the workpiece 7 reaches the required position.

Looking in more detail, the shaft 20 is rotated by the hydraulic power unit 25 from a first working position to a second working position.

Starting from a condition in which the protrusion 24 is in the corresponding first position, the fluid is fed into the first duct 26. The fluid, which consists preferably of oil, is delivered through the first delivery port 28 to the annular chamber 22. Thus, the fluid is directed by the discharge portion 28a at the first contact surface 23a of the stop element 23. The fluid fills a portion of the annular chamber 22 delimited by the first contact surface 23a of the stop element 23 and the first face 24a of the protrusion 24 which, as described above, faces the first contact surface 23a.

The pressure of the fluid on the stop element 23 and on the protrusion 24 causes the latter to move towards the second contact surface 23b. Thus, the protrusion moves to the corresponding second position in which the second face 24b abuts against the second contact surface 23b.

As a result, the shaft 20 rotates by an angle corresponding to the stroke of the protrusion 24 in the annular chamber 22 when it moves to the second working position.

Subsequently, when the shaft 20 has to be rotated in the opposite direction, the fluid is sucked in by the first duct 26 through the first port 28. The fluid is then supplied to the annular chamber 22 by the second duct 27 through the second delivery port 29. Thus, the fluid is directed by the discharge portion 29a at the second contact surface 23b of the stop element 23. The fluid fills a portion of the annular chamber 22 delimited by the second contact surface 23b of the stop element 23 and the second face 24b of the protrusion 24.

The pressure of the fluid on the stop element 23 and on the protrusion 24 causes the latter to move towards the first contact surface 23a. Thus, the protrusion 24 moves to the corresponding first position in which the first 24a abuts against the first contact surface 23a. As a result, the shaft 20 moves to the first working position.

In the detail of the embodiment illustrated in Figure 6 shown purely by way of example and without restricting the scope of the inventive concept, the annular chamber 22 forms an arc of 180°. Thus, the shaft 20 rotates by 180°, which corresponds to the angular value of the annular chamber 22.

Advantageously, the contact surfaces 23a and 23b, of the stop element 23 may make angles other than 180°, depending on how far the shaft 20 has to rotate.

When machining of the workpiece 7 has been completed, the rotary unit 2 transports the clamp 14 to the last machining station 12, that is to say, the unloading station, where the workpiece 7 is released.

The invention achieves significant advantages.

First of all, the machine tool of the transfer type according to the present invention has a simple structure of limited size.

This advantage is made possible by the fact that the number of sectors 9 into which the rotary unit 2 is subdivided has been optimised to five.

As a result, the number of machining stations 12 mounted around the rotary unit 2 is also optimised to five.

Indeed, the Applicant has found that a rotary unit 2 with less than five sectors 9 is unduly restrictive on account of the small number of operations that can be performed on the machine 1.

On the contrary, a rotary unit 2 with more than five sectors 9 is extremely bulky, with a set of machining stations 12 that make the machine tool 1 excessively large.

A small structure has the advantage of allowing the operator to easily access all the operating units 12a forming part of the machine 1 in order to carry out manual maintenance operations.

Another advantage is that the relative position between the operating units 12a and the workpiece 7 can be varied. This advantage is made possible by the fact that the shaft 20 can rotate about the second axis 13 and according to a predetermined angle.

Moreover, the jaws 31 can be removed from the shaft 20 and changed with different jaws to match the structural features of the workpiece 7.

The jaws 31 can be changed quickly and easily by just undoing the screws 33.

The invention described can be subject to modifications and variations without thereby departing from the scope of the inventive concept, as defined in the claims.

## Claims

1. A machine tool of the transfer type comprising:
- a rotary unit (2) that turns about an axis (3) parallel to the ground and whose rotational motion describes a machining path (8) ;
- a plurality of gripping elements (6) mounted at the edge of the rotary unit (2) and designed to transport at least one workpiece (7) along the machining path (8); the rotary unit (2) comprising five sectors (9) positioned around the edge of the rotary unit (2), each of the sectors (9) being equipped with at least one of the gripping elements (6);
and
- five machining stations (12) located on the machining path (8) and designed to receive the workpiece (7);
each sector (9) of the rotary unit (2) being located at one machining station (12), so that all the workpieces (7) held by the gripping elements (6) at the machining stations (12) are machined at the same time; the machine being **characterised in that** one of the machining stations (12) is located under the rotary unit (2) on a vertical axis passing through the axis of rotation (3).

2. The machine according to claim 1, **characterised in that** the rotary unit (2) has the shape of a polygon, preferably a pentagon.

3. The machine according to claim 2, **characterised in that** each sector (9) of the rotary unit (2) lies on one side (10) of the polygon defined by the rotary unit (2).

4. The machine according to claim 2, **characterised in that** each sector (9) of the rotary unit (2) lies on a corner (11) of the polygon defined by the rotary unit (2).

5. The machine according to any of the foregoing claims, **characterised in that** each of the gripping elements (6) is rotatably mounted on the rotary unit (2) in such a way as to turn about a second axis (13) which is substantially transversal to the first axis (3).

6. The machine according to claim 5, **characterised in that** each of the gripping elements (6) comprises a clamp (14).

7. The machine according to claim 6, **characterised in that** the clamp (14) comprises:
- an outer casing (15) having a substantially tubular shape and extending longitudinally in a direction corresponding to the second axis (13), the outer casing (15) being permanently attached to the rotary unit (2) by a first end (16) of the outer casing (15) itself and having an annular surface (18) located at the first end (16) transversally relative to the second axis (13);
- a workpiece (7) clamping portion (19) located at a second end (17) of the outer casing (15) opposite the first end (16);
- a shaft (20) rotatably mounted inside the outer casing (15) longitudinally in a direction coinciding with the second axis of rotation (13), and having a first end (20a) that is rigidly connected to the clamping portion (19) and a second end (20b) located opposite the first end (20a) and abutting against the annular surface (18); and
- means (21) for driving the shaft (20) and located at the first end (16) of the outer casing (15).

8. The machine according to claim 7, **characterised in that** the means (21) for driving the shaft (20) comprise:
- an annular chamber (22) formed between the shaft (20) and the outer casing (15);
- a stop element (23) mounted in the annular chamber (22) and having a first and a second contact surface (23a, 23b);
- a protrusion (24) located in the annular chamber (22) and extending from the second end (20b) of the shaft (20) transversally relative to the longitudinal direction in which the shaft (20) extends, the protrusion (24) moving between a first position in which it abuts against the first contact surface (23a) of the stop element (23) and a second position in which it abuts against the second contact surface (23b) of the stop element (23); and
- a hydraulic power unit (25) that delivers an operating fluid to the annular chamber (22).

9. The machine according to claim 8, **characterised in that** the hydraulic power unit (25) comprises:
- a first duct (26) made in the rotary unit (2) and having a first delivery port (28) made in the annular surface (18) at the first contact surface (23a) of the stop element (23); and
- a second duct (27) made in the rotary unit (2) and having a second delivery port (29) made in the annular surface (18) at the second contact surface (23b) of the stop element (23).

10. The machine according to claim 7, **characterised in that** the clamping portion (19) comprises: at least two jaws (31), permanently mounted to face each other at the first end (20a) of the shaft (20), and movable from a working position in which they are close to each other to clamp the workpiece (7), to an idle position in which they are apart and release the workpiece (7).

11. The machine according to claim 10, **characterised in that** the clamping portion (19) further comprises at least two screws (33) each being inserted in a respective opening (34) made in each jaw (31) and designed to attach the jaw (31) to the shaft (20).

## Patentansprüche

1. Werkzeugmaschine vom Transfertyp, enthaltend:
- eine Dreheinheit (2), die sich um eine Achse (3) parallel zu dem Boden dreht, und deren Drehbewegung eine Bearbeitungsbahn (8) beschreibt;
- eine Anzahl von Greifelementen (6), montiert am Rande der Dreheinheit (2) und dazu bestimmt, wenigstens ein Werkstück (7) entlang der Bearbeitungsbahn (8) zu tragen; wobei die Dreheinheit (2) fünf Sektoren (9) enthält, positioniert um den Rand der Dreheinheit (2), und wobei jeder der Sektoren (9) mit wenigstens einem der Greifelemente (6) ausgestattet ist;
- fünf Bearbeitungsstationen (12), angeordnet an der Bearbeitungsbahn (8) und bestimmt zur Aufnahme des Werkstückes (7);
wobei jeder Sektor (9) der Dreheinheit (2) an einer Bearbeitungsstation (12) angeordnet ist, so dass alle von den Greifelementen (6) an den Bearbeitungsstationen (12) gehaltenen Werkstücke (7) gleichzeitig bearbeitet werden können;
wobei die Maschine **dadurch gekennzeichnet ist, dass** eine der Bearbeitungsstationen (12) unterhalb der Dreheinheit (2) angeordnet ist, und zwar an einer vertikalen Achse, die durch die Drehachse (3) verläuft.

2. Maschine nach Patentanspruch 1, **dadurch gekennzeichnet, dass** die Dreheinheit (2) die Form eines Vielecks hat, vorzugsweise die eines Fünfecks.

3. Maschine nach Patentanspruch 2, **dadurch gekennzeichnet, dass** jeder Sektor (9) der Dreheinheit (2) auf einer Seite (10) des durch die Dreheinheit (2) beschriebenen Vielecks liegt.

4. Maschine nach Patentanspruch 2, **dadurch gekennzeichnet, dass** jeder Sektor (9) der Dreheinheit (2) an einer Ecke (11) des durch die Dreheinheit (2) beschriebenen Vielecks liegt.

5. Maschine nach einem beliebigen der vorstehenden Patentansprüche, **dadurch gekennzeichnet, dass** jedes der Greifelemente (6) drehbar an der Dreheinheit (2) montiert ist, und zwar auf solche Weise, dass es sich um eine zweite Achse (13) dreht, welche im wesentlichen quer zu der ersten Achse (3) verläuft.

6. Maschine nach Patentanspruch 5, **dadurch gekennzeichnet, dass** jedes der Greifelemente (6) eine Klemmvorrichtung (14) enthält.

7. Maschine nach Patentanspruch 6, **dadurch gekennzeichnet, dass** die Klemmvorrichtung (14) wie folgt enthält:
- ein Aussengehäuse (15) von einer im wesentlichen rohrförmigen Ausbildung und sich längs in einer Richtung entsprechend der zweiten Achse (13) erstreckend, wobei das Aussengehäuse (15) dauerhaft an der Dreheinheit (2) befestigt ist, und zwar durch ein erstes Ende (16) des Aussengehäuses (15) selbst, und eine ringförmige Oberfläche (18) aufweist, die an dem ersten Ende (16) und quer im Verhältnis zu der zweiten Achse (13) angeordnet ist;
- einen Klemmabschnitt (19) für das Werkstück (7), angeordnet an einem zweiten Ende (17) des Aussengehäuses (15) entgegengesetzt dem ersten Ende (16);
- eine drehbar im Inneren des Aussengehäuses (15) montierte Welle (20), längsverlaufend in einer Richtung, die mit der zweiten Drehachse (13) übereinstimmt, und die ein erstes, starr an den Klemmabschnitt (19) angeschlossenes Ende (20a) hat, und ein zweites Ende (20b), angeordnet entgegengesetzt dem ersten Ende (20a) und gegen die ringförmige Oberfläche (18) anschlagend; und
- Mittel (21) zum Antreiben der Welle (20), angeordnet an dem ersten Ende (16) des Aussengehäuses (15).

8. Maschine nach Patentanspruch 7, **dadurch gekennzeichnet, dass** die Mittel (21) zum Antreiben der Welle (20) wie folgt enthalten:
- eine ringförmige Kammer (22), beschrieben zwischen der Welle (20) und dem Aussengehäuse (15);
- ein Anschlagelement (23), montiert in der ringförmigen Kammer (22) und eine erste und eine zweite Kontaktfläche (23a, 23b) aufweisend;
- einen Vorsprung (24), angeordnet in der ringförmigen Kammer (22) und sich von dem zweiten Ende (20b) der Welle (20) erstreckend, und zwar quer im Verhältnis zu der Längsrichtung, in welcher die Welle (20) verläuft, wobei sich der Vorsprung (24) bewegt zwischen einer ersten Position, in welcher er gegen die erste Kontaktfläche (23a) des Anschlagelementes (23) anschlägt, und einer zweiten Position, in welcher er gegen die zweite Kontaktfläche (23b) des Anschlagelementes (23) anschlägt; und
- ein Hydroaggregat (25), welcher der ringförmigen Kammer (22) eine Betriebsflüssigkeit zuführt.

9. Maschine nach Patentanspruch 8, **dadurch gekennzeichnet, dass** das Hydroaggregat (25) wie folgt enthält:
- eine erste Leitung (26), eingearbeitet in die Dreheinheit (2) und eine erste Ablassöffnung (28) aufweisend, die in der ringförmigen Oberfläche (18) an der ersten Kontaktfläche (23a) des Anschlagelementes (23) erhalten ist; und
- eine zweite Leitung (27), eingearbeitet in die Dreheinheit (2) und eine zweite Ablassöffnung (29) aufweisend, die in der ringförmigen Oberfläche (18) an der zweiten Kontaktfläche (23b) des Anschlagelementes (23) erhalten ist.

10. Maschine nach Patentanspruch 7, **dadurch gekennzeichnet, dass** der Klemmabschnitt (19) enthält: wenigstens zwei Klemmbacken (31), die dauerhaft so montiert sind, dass sie an dem ersten Ende (20a) der Welle (20) einander zugewandt und beweglich sind aus einer Arbeitsposition, in welcher sie dicht aneinander liegen, um das Werkstück (7) zu klemmen, in eine Ruheposition, in welcher sie voneinander abstehen und das Werkstück (7) freigeben.

11. Maschine nach Patentanspruch 10, **dadurch gekennzeichnet, dass** der Klemmabschnitt (19) ausserdem wenigstens zwei Schrauben (33) enthält, jede eingesetzt in eine entsprechende Öffnung (34), die in jede Klemmbacke (31) eingearbeitet, und dazu bestimmt, die Klemmbacke (31) mit der Welle (20) zu verbinden.

## Revendications

1. Une machine-outil de transfert comprenant :
- un groupe rotatif (2) qui tourne autour d'un axe (3) parallèle au sol et dont le mouvement de rotation décrit un parcours d'usinage (8) ;
- une pluralité d'éléments de prise (6) montés au niveau du bord du groupe rotatif (2) et destinés à transporter au moins une pièce à usiner (7) le long du parcours d'usinage (8) ; le groupe rotatif (2) comprenant cinq secteurs (9) disposés autour du bord du groupe rotatif (2) lui-même, chacun des secteurs (9) étant équipé d'au moins un des éléments de prise (6) ;
et
- cinq stations d'usinage (12) situées sur le parcours d'usinage (8) et destinées à recevoir la pièce à usiner (7) ;
chaque secteur (9) du groupe rotatif (2) étant situé au niveau d'une station d'usinage (12), de sorte que toutes les pièces à usiner (7) maintenues par les éléments de prise (6) au niveau des stations d'usinage (12) sont usinées en même temps ;
la machine étant **caractérisée en ce qu'**une des stations d'usinage (12) est située sous le groupe rotatif (2) sur un axe vertical coupant l'axe de rotation (3).

2. La machine selon la revendication 1, **caractérisée en ce que** le groupe rotatif (2) a la forme d'un polygone, de préférence un pentagone.

3. La machine selon la revendication 2, **caractérisée en ce que** chaque secteur (9) du groupe rotatif (2) est situé sur un côté (10) du polygone défini par le groupe rotatif (2).

4. La machine selon la revendication 2, **caractérisée en ce que** chaque secteur (9) du groupe rotatif (2) est situé sur un angle (11) du polygone défini par le groupe rotatif (2).

5. La machine selon l'une quelconque des revendications précédentes, **caractérisée en ce que** chacun des éléments de prise (6) est monté de façon rotative sur le groupe rotatif (2) de manière à tourner autour d'un second axe (13) qui est essentiellement transversal au premier axe (3).

6. La machine selon la revendication 5, **caractérisée en ce que** chacun des éléments de prise (6) comprend un étau (14).

7. La machine selon la revendication 6, **caractérisée en ce que** l'étau (14) comprend :
- un corps extérieur (15) ayant une forme essentiellement tubulaire et s'étendant longitudinalement dans une direction correspondant au second axe (13), le corps extérieur (15) étant associé de façon permanente au groupe rotatif (2) au niveau d'une première extrémité (16) du corps extérieur (15) lui-même et présentant une surface annulaire (18) située au niveau de la première extrémité (16) transversalement au second axe (13) ;
- une portion (19) d'assujettissement de la pièce à usiner (7), située au niveau d'une seconde extrémité (17) du corps extérieur (15) opposée à la première extrémité (16) ;
- un arbre (20) monté longitudinalement et de façon rotative à l'intérieur du corps extérieur (15) dans une direction coïncidant avec le second axe de rotation (13), et ayant une première extrémité (20a) qui est associée de façon rigide à la portion d'assujettissement (19) et une seconde extrémité (20b) située à l'opposé de la première extrémité (20a) et aboutée contre la surface annulaire (18) ; et
- des moyens (21) pour l'entraînement de l'arbre (20), situés au niveau de la première extrémité (16) du corps extérieur (15).

8. La machine selon la revendication 7, **caractérisée en ce que** les moyens (21) d'entraînement de l'arbre (20) comprennent :
- une chambre annulaire (22) définie entre l'arbre (20) et le corps extérieur (15) ;
- un élément de butée (23) monté dans la chambre annulaire (22) et ayant une première et une seconde surface de contact (23a, 23b) ;
- une saillie (24) située dans la chambre annulaire (22) et s'étendant à partir de la seconde extrémité (20b) de l'arbre (20) transversalement par rapport à la direction longitudinale dans laquelle s'étend l'arbre (20) lui-même, la saillie (24) se déplaçant entre une première position dans laquelle elle vient s'abouter contre la première surface de contact (23a) de l'élément de butée (23), et une seconde position dans laquelle elle vient s'abouter contre la seconde surface de contact (23b) de l'élément de butée (23) ; et
- un bloc d'alimentation hydraulique (25) qui fournit un fluide opérationnel à la chambre annulaire (22).

9. La machine selon la revendication 8, **caractérisée en ce que** le bloc d'alimentation hydraulique (25) comprend :
- un premier conduit (26) prévu dans le groupe rotatif (2) et ayant un premier orifice de distribution (28) réalisé dans la surface annulaire (18) au niveau de la première surface de contact (23a) de l'élément de butée (23) ; et
- un second conduit (27) prévu dans le groupe rotatif (2) et ayant un second orifice de distribution (29) réalisé dans la surface annulaire (18) au niveau de la seconde surface de contact (23b) de l'élément de butée (23).

10. La machine selon la revendication 7, **caractérisée en ce que** la portion d'assujettissement (19) comprend : au moins deux mâchoires (31) montées de façon permanente et face à face au niveau de la première extrémité (20a) de l'arbre (20), et mobiles entre une position opérationnelle dans laquelle elles sont rapprochées l'une de l'autre pour assujettir la pièce à usiner (7), et une position de repos dans laquelle elles sont éloignées l'une de l'autre pour libérer la pièce à usiner (7).

11. La machine selon la revendication 10, **caractérisée en ce que** la portion d'assujettissement (19) comprend en outre au moins deux vis (33) qui sont chacune insérées dans une ouverture (34) respective réalisée dans chaque mâchoire (31) et qui sont chacune destinées à associer la mâchoire (31) à l'arbre (20).
